# EUROPÄISCHE PATENTSCHRIFT

(11) **EP 2 906 358 B1**
(45) Veröffentlichungstag und Bekanntmachung des Hinweises auf die Patenterteilung: **31.05.2017**
(21) Anmeldenummer: 13774167.4
(22) Anmeldetag: 08.10.2013
(51) Int. Cl.: B05B 15/12, B01D 53/04

(54) **OBERFLÄCHENBEHANDLUNGSVORRICHTUNG UND VERFAHREN ZUM BETRIEB EINER OBERFLÄCHENBEHANDLUNGSVORRICHTUNG**
SURFACE TREATMENT DEVICE AND METHOD FOR OPERATING A SURFACE TREATMENT DEVICE
DISPOSITIF DE TRAITEMENT DE SURFACE DE PROCÉDÉ PERMETTANT DE FAIRE FONCTIONNER UN DISPOSITIF DE TRAITEMENT DE SURFACE

(30) Priorität: 11.10.2012 DE 202012103894 U
(43) Veröffentlichungstag der Anmeldung: 19.08.2015
(73) Patentinhaber: Dürr Systems AG, 74321 Bietigheim-Bissingen (DE)
(72) Erfinder: HOLLER, Sebastian, 71732 Tamm (DE); BAITINGER, Michael, 71672 Marbach (DE); WIELAND, Dietmar, 71336 Waiblingen (DE); TOBISCH, Wolfgang, 70193 Stuttgart (DE)
(74) Vertreter: Hoeger, Stellrecht & Partner Patentanwälte mbB
(86) Internationale Anmeldenummer: PCT/EP2013/070969
(87) Internationale Veröffentlichungsnummer: WO 2014/056933

(56) Entgegenhaltungen:
- EP-A1- 0 082 016
- DE-A1- 4 335 231
- DE-A1- 19 939 032
- DE-A1-102010 030 280

## Beschreibung

Die vorliegende Erfindung betrifft eine Oberflächenbehandlungsvorrichtung zum Behandeln einer Oberfläche des Werkstücks.

Die DE 10 2010 052 461 A1 offenbart eine Filtervorrichtung, welche eine Adsorptionsfiltereinheit und eine thermische Regenerationseinrichtung umfasst.

Die DE 10 2010 030 280 A1 offenbart eine Lackieranlage, bei welcher eine Vorrichtung zum Abscheiden von Lösemittel aus einem Gasstrom vorgesehen ist.

Die DE 43 35 231 A1 offenbart ein Verfahren und eine Anlage zum Reinigen und/oder Trocknen von Werkstücken.

Die DE 199 39 032 A1 offenbart ein Verfahren und eine Anlage zur Oberflächenbehandlung von Teilen mit einem Lösungsmittel.

Der vorliegenden Erfindung liegt die Aufgabe zugrunde, eine Oberflächenbehandlungsvorrichtung zum Behandeln einer Oberfläche eines Werkstücks bereitzustellen, welche einfach und sicher betreibbar ist.

Diese Aufgabe wird erfindungsgemäß durch eine Oberflächenbehandlungsvorrichtung gemäß Anspruch 1 gelöst.

Dadurch, dass die Lösemittelabscheidevorrichtung wahlweise in einen Abscheidezustand oder in einen Ruhezustand versetzbar ist, können verschiedene Betriebszustände der Oberflächenbehandlungsvorrichtung einfach und schnell eingestellt werden. Insbesondere kann hierdurch ein Ruhebetrieb der Oberflächenbehandlungsvorrichtung einfach und schnell eingestellt werden. Ein Arbeitsbereich der Oberflächenbehandlungsvorrichtung, welcher in einem Behandlungsbetrieb der Oberflächenbehandlungsvorrichtung mit Lösemittel verunreinigt ist, kann hierdurch vorzugsweise einfach und sicher von Lösemitteln befreit werden, so dass er für Personen zugänglich wird, ohne Gesundheitsschäden befürchten zu müssen.

Das wahlweise Versetzen der Lösemittelabscheidevorrichtung in den Abscheidezustand oder in den Ruhezustand erfolgt insbesondere durch ein mechanisches Umschalten zwischen dem Abscheidezustand und dem Ruhezustand, beispielsweise durch Bewegen mindestens eines Lösemittelabscheideelements und/oder durch Umschalten von Ventilen oder Klappen und eine daraus resultierende Strömungsumlenkung. Alternativ oder ergänzend hierzu kann vorgesehen sein, dass die Lösemittelabscheidevorrichtung durch elektrisches Umschalten, insbesondere ein An- und Ausschalten, in den Abscheidezustand oder in den Ruhezustand versetzbar ist.

Vorzugsweise wird die Lösemittelabscheidevorrichtung im Abscheidezustand zumindest mit einem Teil des durch den Arbeitsbereich hindurchgeführten Gasstroms durchströmt.

Im Ruhezustand wird der durch den Arbeitsbereich hindurchgeführte Gasstrom vorzugsweise zumindest teilweise, insbesondere vollständig, an der Lösemittelabscheidevorrichtung vorbeigeführt.

In dem Ruhezustand der Lösemittelabscheidevorrichtung ist die Abscheideleistung der Lösemittelabscheidevorrichtung vorzugsweise geringer als im Abscheidezustand.

Vorzugsweise wird im Ruhezustand der Lösemittelabscheidevorrichtung eine geringere Menge von Lösemittel aus dem durch den Arbeitsbereich hindurchgeführten Gasstrom abgeschieden als in einem Abscheidezustand.

Insbesondere dann, wenn die Lösemittelabscheidevorrichtung im Ruhezustand ist, erfolgt vorzugsweise keine oder nur eine geringe weitere Abscheidung von Lösemittel mittels einer anderen Vorrichtung aus dem durch den Arbeitsbereich hindurchgeführten Gasstrom.

Im Ruhezustand der Lösemittelabscheidevorrichtung ist diese vorzugsweise in einem Stand-by-Zustand, insbesondere um im Bedarfsfall zügiger in den Abscheidezustand versetzt werden zu können als aus einem ausgeschalteten Zustand.

Unter einem Lösemittel ist in dieser Beschreibung und den beigefügten Ansprüchen insbesondere ein Stoff zu verstehen, der Gase, Flüssigkeiten oder Feststoffe lösen oder verdünnen kann. Eine eventuelle chemische Wechselwirkung zwischen dem gelösten Stoff und dem lösenden Stoff kann die Wirkung des Lösemittels verstärken.

Insbesondere kann vorgesehen sein, dass Lösemittel Lacklösemittel ist.

Lösemittel kann als Dampf, Aerosol und/oder gasförmig vorliegen.

Ein Lösemittel ist vorzugsweise ein flüchtiger Stoff, welcher eine Siedetemperatur von weniger als 100 °C (bei Normaldruck) aufweist.

Insbesondere ist ein Lösemittel ein organisches Lösemittel, beispielsweise ein flüchtiges organisches Lösemittel (volatile organic compounds VOC).

Vorteilhaft kann es sein, wenn der Gasstrom mittels der Strömungsführungsvorrichtung erneut demselben Arbeitsbereich und/oder einem weiteren Arbeitsbereich der Oberflächenbehandlungsvorrichtung zuführbar ist. Auf diese Weise kann ein Umluftbetrieb und/oder ein Kaskadenbetrieb der Strömungsführungsvorrichtung ermöglicht werden.

Die Oberflächenbehandlungsvorrichtung umfasst vorzugsweise eine als regenerierbare Filtervorrichtung ausgebildete Teilchenabscheidevorrichtung zum Abscheiden von Teilchen aus einem durch einen Arbeitsbereich geführten mit Teilchen beladenen Gasstrom.

Teilchen sind insbesondere Lack-Overspray-Teilchen und/oder Tröpfchen aus Lack-Overspray, welcher insbesondere in einer Lackiervorrichtung anfällt.

Unter einer regenerierbaren Filtervorrichtung ist eine Abtrennvorrichtung zum Abtrennen von Verunreinigungen aus einem durch eine Lackiervorrichtung geführten Gasstrom, insbesondere zum Abtrennen von Lack-Overspray aus einem Overspray-Partikel enthaltenden Rohgasstrom, zu verstehen, bei welcher abgeschiedene Verunreinigungen abgereinigt werden können, ohne Filterelemente der Filtervorrichtung austauschen zu müssen.

Unter einer regenerierbaren Filtervorrichtung ist insbesondere auch eine Filtervorrichtung zu verstehen, die eines oder mehrere Trockenfilterelemente und/oder Trockenabscheidungsvorrichtungen aufweist, bei denen eine Reinigung eines Gasstroms im Wesentlichen ohne die Zugabe einer Flüssigkeiten an den Filterelementen erfolgt. Davon unabhängig können nachfolgende oder vorgelagerte Reinigungsstufen wiederum unter Verwendung von (bei Normalbedingungen) flüssigen Löse- oder Reinigungsmitteln vorgesehen sein.

Bei einer regenerierbaren Filtervorrichtung kann ferner vorgesehen sein, dass die Filtervorrichtung mindestens ein Filterelement umfasst, welches im Filterbetrieb mit einer Sperrschicht oder einer Schutzschicht versehen ist, die Filterhilfsmaterial, insbesondere Kalksteinmehl, umfasst.

Auf diese Weise kann im Filterbetrieb der Filtervorrichtung verhindert werden, dass sich das Filterelement mit Verunreinigungen aus dem der Filtervorrichtung zugeführten Gasstrom zusetzt. Durch eine Abreinigung der Sperrschicht bzw. Schutzschicht von dem Filterelement der Filtervorrichtung kann eine besonders einfache Regeneration des Filterelements erfolgen, welches anschließend durch Aufbringen einer frischen Sperrschicht bzw. einer frischen Schutzschicht erneut verwendbar ist.

Als Lack kommt insbesondere Pulverlack oder Fluidlack in Betracht. Mit dem Begriff "Fluidlack" wird dabei - im Unterschied zum Begriff "Pulverlack" - ein Lack mit einer fließfähigen Konsistenz, von flüssig bis pastös (beispielsweise im Falle eines PVC-Plastisols) bezeichnet. Der Begriff "Fluidlack" umfasst insbesondere die Begriffe "Flüssiglack" und "Nasslack".

Bei der Verwendung von Fluidlack ist der Lack-Overspray aus einer Lackiervorrichtung somit ein Fluidlack-Overspray, bei der Verwendung von Nasslack ein Nasslack-Overspray.

Die Lösemittelabscheidevorrichtung ist vorzugsweise eine von der Teilchenabscheidevorrichtung verschiedene Vorrichtung. Vorzugsweise ist die Lösemittelabscheidevorrichtung zusätzlich zu einer Teilchenabscheidevorrichtung vorgesehen.

Der durch den Arbeitsbereich hindurchgeführte Gasstrom ist vorzugsweise zunächst der Teilchenabscheidevorrichtung zuführbar, dabei insbesondere mittels derselben reinigbar, und anschließend wahlweise mittels der Lösemittelabscheidevorrichtung reinigbar oder ungereinigt an derselben vorbei führbar oder ungereinigt durch dieselbe hindurchführbar.

Die Oberflächenbehandlungsvorrichtung umfasst eine Zuluftvorrichtung, mittels welcher der Strömungsführungsvorrichtung ein Zuluftstrom zuführbar ist.

Ein Zuluftstrom ist insbesondere ein Gasstrom aus Frischluft, insbesondere Umgebungsluft, Hallenluft, etc. Ein Zuluftstrom kann aber auch aus einem Arbeitsbereich der Oberflächenbehandlungsvorrichtung zugeführt werden. Ein Zuluftstrom aus Frischluft ist vorzugsweise mit weniger Teilchen oder Lösemittel beladen als ein Zuluftstrom, der aus einem Arbeitsbereich der Oberflächenbehandlungsvorrichtung zugeführt wird.

Unter einem Behandlungsbetrieb ist insbesondere ein Lackierbetrieb, in welchem Werkstücke lackiert werden, ein Trocknungsbetrieb, in welchem Werkstücke getrocknet werden und/oder ein Kontrollbetrieb, in welchem Werkstücke kontrolliert und/oder nachgebessert werden, zu verstehen.

Vorteilhaft kann es sein, wenn die Oberflächenbehandlungsvorrichtung eine Abluftvorrichtung umfasst, mittels welcher ein Abluftstrom aus der Strömungsführungsvorrichtung abführbar ist.

Insbesondere kann vorgesehen sein, dass mittels der Abluftvorrichtung ein Teil eines in einem Kreislauf geführten Gasstroms, das heißt eines Umluftstroms, abzweigbar und abführbar ist.

Ein Volumenstrom des Zuluftstroms entspricht vorzugsweise im Wesentlichen einem Volumenstrom des Abluftstroms.

Vorzugsweise beträgt der Volumenstrom des Zuluftstroms höchstens ungefähr 30%, insbesondere höchstens ungefähr 20%, beispielsweise höchstens ungefähr 10%, des Volumenstroms des durch den Arbeitsbereich hindurchgeführten Gasstroms.

Ferner beträgt vorzugsweise der Volumenstrom des Abluftstroms höchstens ungefähr 30%, insbesondere höchstens ungefähr 20%, beispielsweise höchstens ungefähr 10%, des Volumenstroms des durch den Arbeitsbereich hindurchgeführten Gasstroms.

Der durch den Arbeitsbereich hindurchgeführte Gasstrom wird vorzugsweise als Umluftstrom in einem Kreislauf geführt.

Mittels der Zuluftvorrichtung der Oberflächenbehandlungsvorrichtung ist der Strömungsführungsvorrichtung ein Zuluftstrom zuführbar, wobei vorzugsweise mittels der Lösemittelabscheidevorrichtung Lösemittel aus dem Zuluftstrom abscheidbar und/oder in den Zuluftstrom abgebbar ist.

Insbesondere kann vorgesehen sein, dass in dem Ruhezustand der Lösemittelabscheidevorrichtung Lösemittel aus dem Zuluftstrom abscheidbar und/oder in den Zuluftstrom abgebbar ist.

Bei einer Ausgestaltung der Erfindung kann vorgesehen sein, dass der Zuluftstrom wahlweise durch die Lösemittelabscheidevorrichtung hindurchführbar oder an der Lösemittelabscheidevorrichtung vorbeiführbar und anschließend zusammen mit zumindest einem Teil eines bereits zuvor durch den Arbeitsbereich geführten Gasstroms erneut demselben Arbeitsbereich und/oder einem weiteren Arbeitsbereich der Oberflächenbehandlungsvorrichtung zuführbar ist.

Der Teil des bereits zuvor durch den Arbeitsbereich geführten Gasstroms ist vorzugsweise durch die Lösemittelabscheidevorrichtung hindurchführbar, wenn der Zuluftstrom zur Vermeidung einer Lösemittelabscheidung an der Lösemittelabscheidevorrichtung vorbeiführbar ist.

Ferner kann vorgesehen sein, dass der Teil des bereits zuvor durch den Arbeitsbereich geführten Gasstroms an der Lösemittelabscheidevorrichtung vorbeiführbar ist, wenn der Zuluftstrom zum Abscheiden oder Abgeben von Lösemittel durch die Lösemittelabscheidevorrichtung hindurchführbar ist.

Bei einer Ausgestaltung der Erfindung ist vorgesehen, dass die Oberflächenbehandlungsvorrichtung eine Steuervorrichtung umfasst, mittels welcher die Oberflächenbehandlungsvorrichtung wahlweise in einem Behandlungsbetrieb, in dem Werkstücke behandelt werden, oder in einem Ruhebetrieb, in dem keine Werkstücke behandelt werden, betreibbar ist.

In dem Behandlungsbetrieb der Oberflächenbehandlungsvorrichtung ist die Lösemittelabscheidevorrichtung vorzugsweise im Ruhezustand.

In dem Ruhebetrieb der Oberflächenbehandlungsvorrichtung ist die Lösemittelabscheidevorrichtung vorzugsweise im Abscheidezustand, so die Lösemittelabscheidevorrichtung Lösemittel aus dem durch den Arbeitsbereich hindurchgeführten Gasstrom abscheidet.

Vorteilhaft kann es sein, wenn die Lösemittelabscheidevorrichtung eine Lösemittelzwischenspeichervorrichtung ist, mittels welcher Lösemittel, das in einem Behandlungsbetrieb der Oberflächenbehandlungsvorrichtung in einem einem Arbeitsbereich zuzuführenden Gasstrom enthalten ist, in einem Ruhebetrieb der Oberflächenbehandlungsvorrichtung aus dem Gasstrom abscheidbar ist.

Insbesondere kann hierbei vorgesehen sein, dass Lösemittel aus einem durch den Arbeitsbereich geführten Umluftstrom abscheidbar, insbesondere adsorbierbar, ist. Auf diese Weise kann eine Lösemittelkonzentration in dem den Arbeitsbereich durchströmenden Gasstrom einfach und sicher reduziert werden. Der Arbeitsbereich kann dann vorzugsweise von Personen betreten werden, ohne eine gesundheitliche Beeinträchtigung der Personen durch vorhandene Lösemittel befürchten zu müssen.

Ferner kann vorgesehen sein, dass die Lösemittelabscheidevorrichtung eine Lösemittelzwischenspeichervorrichtung ist, mittels welcher Lösemittel, das in einem Ruhebetrieb der Oberflächenbehandlungsvorrichtung in der Lösemittelabscheidevorrichtung aufgenommen ist, in einem Behandlungsbetrieb der Oberflächenbehandlungsvorrichtung an einen einem Arbeitsbereich zuzuführenden Gasstrom abgebbar ist. Das Lösemittel ist an einen durch den Arbeitsbereich geführten Umluftstrom abgebbar, insbesondere in denselben desorbierbar. Insbesondere kann hierbei ein Spülen der Lösemittelabscheidevorrichtung, beispielsweise mit einem Zuluftstrom, erfolgen, um in der Lösemittelabscheidevorrichtung aufgenommenes Lösemittel abzugeben. Vorzugsweise kann bei wenigstens teilweiser Umluftfahrweise mittels einer Lösemittelzwischenspeichervorrichtung eine schnellere Wiederherstellung eines Betriebszustands der Oberflächenbehandlungsvorrichtung zur Durchführung des Behandlungsbetriebs erfolgen, als wenn die Zuluft wenigstens teilweise Frischluft ist. Mit zunehmendem Umluftanteil sinkt der vor Zuführung zu konditionierende Frischluft-Anteil.

Eine Lösemittelabscheidevorrichtung umfasst vorzugsweise eine Sorptionsvorrichtung, beispielsweise eine Absorptionsvorrichtung.

Insbesondere kann vorgesehen sein, dass die Lösemittelabscheidevorrichtung eine Adsorptionsvorrichtung zur Adsorption von Lösemittel, eine Kondensationsvorrichtung zum Auskondensieren von Lösemittel und/oder eine Verbrennungsvorrichtung zur thermischen Umwandlung von Lösemittel umfasst. Beispielsweise kann vorgesehen sein, dass die Lösemittelabscheidevorrichtung ein Adsorbenz-Abreinigungssystem umfasst.

Es kann vorgesehen sein, dass die Lösemittelabscheidevorrichtung zum Abscheiden von Lösemittel ein Aktivkohlematerial und/oder ein Zeolithmaterial umfasst.

Insbesondere kann vorgesehen sein, dass die Lösemittelabscheidevorrichtung zum Abscheiden von Lösemittel eine Aktivkohleschüttung und/oder eine Zeolithschüttung umfasst.

Unter einem Zeolithmaterial ist insbesondere ein Material zu verstehen, welches Bestandteile enthält, die mineralogisch zu der Zeolithgruppe zählen, oder welches vollständig aus einem Material gebildet ist, welches mineralogisch zu der Zeolithgruppe zählt.

Materialien der Zeolithgruppe zeichnen sich insbesondere durch folgende Zusammensetzung aus:

Mⁿ⁺_{x/n} [(AlO₂)⁻ₓ (SiO₂)_{y}]·z H₂O

Zeolithe sind insbesondere kristalline Alumosilikate natürlicher oder künstlicher Herkunft.

Bei einer Ausgestaltung der Erfindung ist vorgesehen, dass die Lösemittelabscheidevorrichtung mindestens ein Filterelement umfasst, welches ein Aktivkohlematerial umfasst. Vorzugsweise kann mindestens ein Aktivkohleelement in das mindestens eine Filterelement integriert sein. Hierdurch kann vorzugsweise eine Staubentwicklung reduziert oder vermieden werden.

Eine Verbrennungsvorrichtung kann insbesondere eine katalytische Oxidationsvorrichtung sein. Hierdurch kann eine geringe Wärmeentwicklung gewährleistet werden.

Wenn die Lösemittelabscheidevorrichtung eine Verbrennungsvorrichtung umfasst, umfasst der Begriff "Abscheiden" auch ein "Verbrennen".

Der Arbeitsbereich der Oberflächenbehandlungsvorrichtung, welchem mittels der Strömungsführungsvorrichtung ein Gasstrom zuführbar ist, ist ein Lackierbereich, ein Trocknungsbereich und/oder ein Kontrollbereich zum Lackieren, Trocknen, Kontrollieren und/oder Nacharbeiten von Werkstücken.

Es kann vorgesehen sein, dass die Oberflächenbehandlungsvorrichtung eine Konditioniervorrichtung umfasst, mittels welcher ein Zuluftstrom und/oder ein durch einen Arbeitsbereich hindurchgeführter Gasstrom vor der Zuführung zu einem Arbeitsbereich konditionierbar sind.

Insbesondere kann vorgesehen sein, dass der Zuluftstrom und/oder der Gasstrom hinsichtlich der Luftfeuchtigkeit und/oder der Temperatur konditionierbar sind.

Die Konditioniervorrichtung umfasst vorzugsweise einen Wärmetauscher, eine Befeuchtungsvorrichtung, eine Entfeuchtungsvorrichtung, einen Ventilator, eine Heizvorrichtung und/oder eine Kühlvorrichtung.

Die Lösemittelabscheidevorrichtung ist vorzugsweise stromaufwärts oder stromabwärts der Konditioniervorrichtung angeordnet.

Die erfindungsgemäße Oberflächenbehandlungsvorrichtung umfasst insbesondere eine Lackieranlage und/oder eine Trocknungsanlage zum Lackieren bzw. Trocknen von Fahrzeugkarosserien.

Ferner kann vorgesehen sein, dass die Oberflächenbehandlungsvorrichtung als eine Lackieranlage und/oder Trocknungsanlage ausgebildet ist.

Die vorliegende Erfindung betrifft ferner ein Verfahren zum Betrieb einer Oberflächenbehandlungsvorrichtung.

Der Erfindung liegt diesbezüglich die Aufgabe zugrunde, ein Verfahren bereitzustellen, mittels welchem eine Oberflächenbehandlungsvorrichtung einfach und sicher betreibbar ist.

Diese Aufgabe wird erfindungsgemäß durch ein Verfahren gemäß Anspruch 10 gelöst.

Dadurch, dass bei dem erfindungsgemäßen Verfahren die Lösemittelabscheidevorrichtung wahlweise in einen Abscheidezustand oder in einen Ruhezustand versetzt wird, kann die Oberflächenbehandlungsvorrichtung einfach und sicher betrieben werden. Insbesondere kann hierdurch besonders einfach wahlweise ein Behandlungsbetrieb der Oberflächenbehandlungsvorrichtung oder ein Ruhebetrieb der Oberflächenbehandlungsvorrichtung eingestellt werden.

Vorteilhaft kann es sein, wenn der durch den Arbeitsbereich hindurchgeführte Gasstrom erneut demselben Arbeitsbereich oder einem weiteren Arbeitsbereich der Oberflächenbehandlungsvorrichtung zugeführt wird.

Insbesondere kann vorgesehen sein, dass ein Zuluftstrom wahlweise mittels der Lösemittelabscheidevorrichtung gereinigt wird und anschließend zusammen mit zumindest einem Teil eines bereits zuvor durch den Arbeitsbereich geführten Gasstroms erneut demselben Arbeitsbereich und/oder einem weiteren Arbeitsbereich der Oberflächenbehandlungsvorrichtung zugeführt wird.

Vorteilhaft kann es sein, wenn der durch den Arbeitsbereich hindurchgeführte Gasstrom in einem Kreislauf geführt wird. Der durch den Arbeitsbereich hindurchgeführte Gasstrom ist dann vorzugsweise ein Umluftstrom.

Günstig kann es sein, wenn in einem Behandlungsbetrieb der Oberflächenbehandlungsvorrichtung, in welchem Werkstücke behandelt werden, die Lösemittelabscheidevorrichtung in dem Ruhezustand ist.

Ferner kann vorgesehen sein, dass in einem Ruhebetrieb der Oberflächenbehandlungsvorrichtung, in welchem keine Werkstücke behandelt werden, die Lösemittelabscheidevorrichtung in dem Abscheidezustand ist, in welchem die Lösemittelabscheidevorrichtung Lösemittel aus dem durch den Arbeitsbereich hindurchgeführten Gasstrom abscheidet.

Bei einer Ausgestaltung der Erfindung ist vorgesehen, dass der durch den Arbeitsbereich hindurchgeführte und/oder demselben Arbeitsbereich oder einem weiteren Arbeitsbereich zuzuführende Gasstrom in einem Ruhebetrieb der Oberflächenbehandlungsvorrichtung, in welchem keine Werkstücke behandelt werden, hinsichtlich seiner Luftfeuchtigkeit und/oder hinsichtlich seiner Temperatur konditioniert wird, bevor und/oder nachdem der Gasstrom der Lösemittelabscheidevorrichtung zugeführt wird.

Die erfindungsgemäße Oberflächenbehandlungsvorrichtung weist vorzugsweise eine Steuervorrichtung auf, mittels welcher die Oberflächenbehandlungsvorrichtung so steuerbar und/oder regelbar ist, dass einzelne oder mehrere Verfahrensschritte des erfindungsgemäßen Verfahrens mittels der Oberflächenbehandlungsvorrichtung durchführbar sind.

Die Oberflächenbehandlungsvorrichtung eignet sich insbesondere zur Durchführung des erfindungsgemäßen Verfahrens.

Ferner können die erfindungsgemäße Oberflächenbehandlungsvorrichtung und/oder das erfindungsgemäße Verfahren zum Betrieb einer Oberflächenbehandlungsvorrichtung einzelne oder mehrere der nachfolgend beschriebenen Merkmale und/oder Vorteile aufweisen:
Ein Arbeitsbereich kann ein automatisierter Arbeitsbereich sein, in welchem sich im Behandlungsbetrieb der Oberflächenbehandlungsvorrichtung keine Personen aufhalten. Insbesondere kann vorgesehen sein, dass die Oberflächenbehandlungsvorrichtung mindestens einen automatisierten Arbeitsbereich zum Lackieren, Trocknen, Kontrollieren und/oder Nacharbeiten der Werkstücke umfasst.

Ein Arbeitsbereich kann ferner ein manueller Arbeitsbereich sein, in welchem sich im Behandlungsbetrieb der Oberflächenbehandlungsvorrichtung mindestens eine Person aufhält. Insbesondere kann vorgesehen sein, dass die Oberflächenbehandlungsvorrichtung mindestens einen manuellen Arbeitsbereich zum Lackieren, Trocknen, Kontrollieren und/oder Nacharbeiten der Werkstücke umfasst.

Die Oberflächenbehandlungsvorrichtung ermöglicht vorzugsweise einen Umluftbetrieb, so dass ein darin geführter Umluftstrom mehrfach verwendbar ist.

Aufgrund des Hindurchführens des Gasstroms durch den Arbeitsbereich nimmt der Gasstrom insbesondere Lösemittel auf. Durch ein mehrfaches Hindurchführen des Gasstroms durch den Arbeitsbereich kann das Lösemittel aufkonzentriert werden, beispielsweise auf mindestens ungefähr 300 mg/m³, insbesondere mindestens ungefähr 1 g/m³, höchstens jedoch ungefähr 2 g/m³, insbesondere höchstens ungefähr 1,5 g/m³.

Die Konzentration des Lösemittels in dem durch den Arbeitsbereich hindurchgeführten Gasstrom hängt insbesondere von dem Verhältnis des Volumenstroms der Zuluft zu dem Volumenstrom der Umluft ab. Ferner können Verschleppungsverluste durch die Werkstücke, insbesondere die Fahrzeugkarosserien, die Konzentration des Lösemittels in dem Gasstrom beeinflussen.

Um Personen den Zutritt zu einem Arbeitsbereich zu ermöglichen, muss nach gesetzlichen Vorschriften die Gesamtkonzentration an flüchtigen organischen Kohlenwasserstoffen (volatile organic compounds VOC) geringer als 50 ppm sein. Dies kann grundsätzlich durch eine erhöhte Zuführung von Zuluft ermöglicht werden. Allerdings kann dies die Temperatur und die Luftfeuchtigkeit in dem Arbeitsbereich negativ beeinflussen. Die notwendigen Prozessparameter zur Durchführung von Behandlungsvorgängen, das heißt zum Erreichen des Behandlungsbetriebs der Oberflächenbehandlungsvorrichtung, können dann nur sehr aufwendig und/oder zeitverzögert erhalten werden. Eine Zwischenspeicherung von Lösemittel in der Lösemittelabscheidevorrichtung ermöglicht hingegen vorzugsweise einen schnellen Zutritt zu dem Arbeitsbereich und/oder eine schnelle Wiederherstellung der zur Durchführung des Behandlungsbetriebs der Oberflächenbehandlungsvorrichtung notwendigen Prozessparameter.

Vorzugsweise kann die Lösemittelabscheidevorrichtung im Behandlungsbetrieb der Oberflächenbehandlungsvorrichtung regeneriert werden, beispielsweise indem Zuluft durch die Lösemittelabscheidevorrichtung hindurchgeleitet wird und Lösemittel aufnimmt.

Vorzugsweise erfolgt die Regeneration der Lösemittelabscheidevorrichtung bei Umgebungsbedingungen. Hierdurch kann die Regeneration über einen langen Zeitraum erfolgen, so dass die dem Arbeitsbereich zuzuführende Zuluft lediglich eine geringe Lösemittelkonzentration aufweist. In einem modifizierten Ausführungsbeispiel ist eine separate thermische Abluftreinigungseinheit (TAR) oder eine sonstige Heizeinrichtung für eine bedarfsabhängige Zuschaltung vorgesehen.

Der Lösemittelgehalt in einem Umluftstrom wird vorzugsweise auf einem sehr niedrigen Niveau gehalten. Hierdurch kann vorzugsweise ein Volumenstrom des Umluftgasstroms im Verhältnis zum Volumenstrom des Abluftgasstroms erhöht werden. Dies kann wiederum Energieeinsparungen ermöglichen.

Durch die Erzielung eines geringen Lösemittelgehalts in dem Umluftstrom werden die Zugangszeiten zu dem Arbeitsbereich vorzugsweise verkürzt, insbesondere gegenüber einem Umluftstrom mit höherem Lösemittelgehalt. Ferner können hierdurch aus Undichtigkeiten im System, zum Beispiel in Kanälen, Zuluftanlagen, Plenum etc., entstehende Geruchsbelästigungen in der Umgebung, insbesondere in angrenzenden Gewerken, reduziert werden. Auch kann hierdurch die Belastung von Bauteilen, beispielsweise Dichtungen, Kunststoffteilen, etc., durch eine andauernde Abreinigung minimiert werden.

Ein Einsatz von Wärmerückgewinnungsvorrichtungen, insbesondere zur Wärmerückgewinnung aus der Abluft, insbesondere der Rest-Fortluft, wird vorzugsweise ermöglicht.

Die Lösemittelabscheidevorrichtung kann beispielsweise eine Kühlfalle umfassen.

Insbesondere dann, wenn die Lösemittelabscheidevorrichtung eine Kühlfalle umfasst, aber auch alternativ hierzu, kann vorgesehen sein, dass die Lösemittelabscheidevorrichtung eine thermische Abluftreinigung (TAR) und/oder eine katalytische Oxidationsvorrichtung umfasst. Eine katalytische Oxidationsvorrichtung arbeitet vorzugsweise ungefähr bei Umgebungstemperatur, insbesondere bei niedrigerer Temperatur als eine thermische Abluftreinigung (TAR). Insbesondere liegt diese Temperatur unter 200 °C.

Es kann vorgesehen sein, dass die Oberflächenbehandlungsvorrichtung eine Bypass-Vorrichtung umfasst. Beispielsweise kann vorgesehen sein, dass im Behandlungsbetrieb der Oberflächenbehandlungsvorrichtung der Gasstrom die Bypass-Vorrichtung geführt wird. In einem Ruhebetrieb der Oberflächenbehandlungsvorrichtung, in welchem Personen Zutritt zu dem Arbeitsbereich erhalten sollen, kann der durch den Arbeitsbereich hindurchgeführte Gasstrom, insbesondere Umluftstrom, statt durch die Bypass-Vorrichtung durch die Lösemittelabscheidevorrichtung geführt werden und dabei mittels der Lösemittelabscheidevorrichtung gereinigt, insbesondere im Wesentlichen von Lösemittel befreit, werden.

Eine Regeneration der Lösemittelabscheidevorrichtung erfolgt vorzugsweise durch die Zuführung eines Gasstroms, beispielsweise eines Zuluftstroms, eines Teils eines in einem Kreislauf geführten Gasstroms (Umluftstroms) und/oder eines Abluftstroms zu der Lösemittelabscheidevorrichtung.

Die Regeneration der Lösemittelabscheidevorrichtung kann ferner vorzugsweise auch während Behandlungspausen und Wartungs- und/oder Reinigungspausen erfolgen.

Weitere bevorzugte Merkmale und/oder Vorteile sind Gegenstand der nachfolgenden Beschreibung und der zeichnerischen Darstellung von Ausführungsbeispielen.

In den Zeichnungen zeigen:
- Fig. 1: eine schematische vertikale Schnittdarstellung einer ersten Ausführungsform einer Oberflächenbehandlungsvorrichtung, bei welcher keine Abluftreinigung vorgesehen ist;
- Fig. 2: eine der Fig. 1 entsprechende schematische Darstellung einer zweiten Ausführungsform einer Oberflächenbehandlungsvorrichtung, bei welcher eine thermische Abluftreinigungsvorrichtung zur Reinigung der Abluft vorgesehen ist;
- Fig. 3: eine der Fig. 1 entsprechende schematische Darstellung einer dritten Ausführungsform einer Oberflächenbehandlungsvorrichtung, welche eine thermische Abluftreinigungsvorrichtung und eine KohlefaserPapier-Rotor-Vorrichtung zur Reinigung der Abluft umfasst;
- Fig. 4: eine schematische Darstellung einer erfindungsgemässen vierten Ausführungsform einer Oberflächenbehandlungsvorrichtung, bei welcher eine Lösemittelabscheidevorrichtung stromaufwärts einer Konditioniervorrichtung angeordnet ist, wobei die Oberflächenbehandlungsvorrichtung in einem Behandlungsbetrieb ist;
- Fig. 5: eine der Fig. 4 entsprechende schematische Darstellung der vierten Ausführungsform der Oberflächenbehandlungsvorrichtung, wobei die Oberflächenbehandlungsvorrichtung in einem Ruhebetrieb ist;
- Fig. 6: eine der Fig. 4 entsprechende schematische Darstellung einer fünften Ausführungsform einer Oberflächenbehandlungsvorrichtung, bei welcher eine Lösemittelabscheidevorrichtung stromabwärts einer Konditioniervorrichtung angeordnet ist, wobei die Oberflächenbehandlungsvorrichtung in einem Behandlungsbetrieb ist;
- Fig. 7: eine der Fig. 6 entsprechende schematische Darstellung der fünften Ausführungsform der Oberflächenbehandlungsvorrichtung, wobei die Oberflächenbehandlungsvorrichtung in einem Ruhebetrieb ist; und
- Fig. 8: eine der Fig. 4 entsprechende schematische Darstellung einer sechsten Ausführungsform einer Oberflächenbehandlungsvorrichtung mit einer alternativen Strömungsführungsvorrichtung.

Gleiche oder funktional äquivalente Elemente sind in sämtlichen Figuren mit denselben Bezugszeichen versehen.

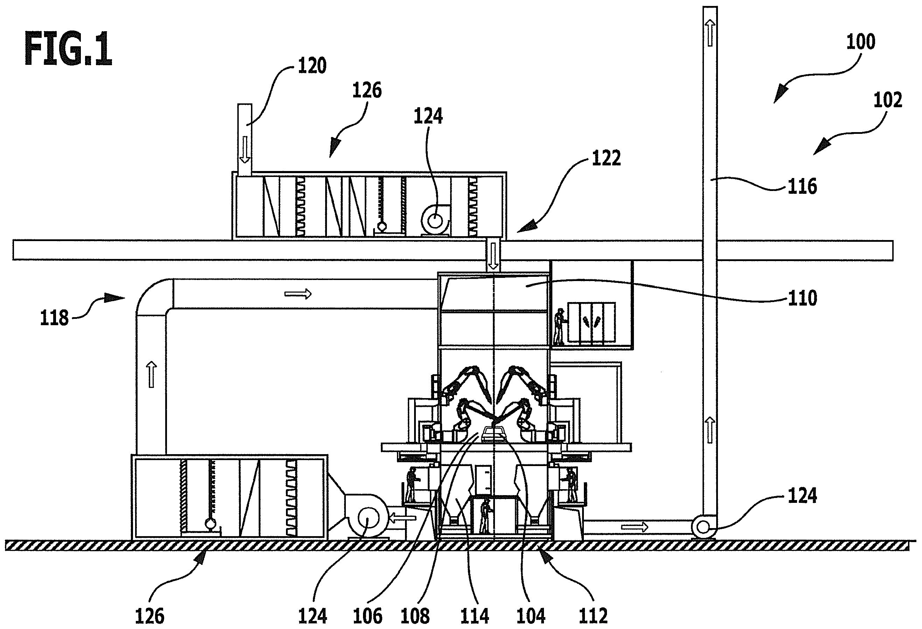

Eine in Fig. 1 dargestellte, als Ganzes mit 100 bezeichnete Oberflächenbehandlungsvorrichtung ist beispielsweise als eine Lackieranlage 102 zum Lackieren von Werkstücken 104, insbesondere Fahrzeugkarosserien, ausgebildet.

Die Oberflächenbehandlungsvorrichtung 100 umfasst hierzu einen als Lackierbereich 106 ausgebildeten Arbeitsbereich 108, welchem die Werkstücke 104 zum Lackieren derselben zuführbar sind.

Dieser Arbeitsbereich 108 wird in einem Behandlungsbetrieb der Oberflächenbehandlungsvorrichtung 100, in welchem Werkstücke 104 behandelt, insbesondere lackiert, werden, mit einem Gasstrom, insbesondere einem Luftstrom, durchströmt.

Der Gasstrom durchströmt den Arbeitsbereich 108 dabei in der Schwerkraftrichtung von oben nach unten.

Der Gasstrom wird dem Arbeitsbereich 108 durch ein über dem Arbeitsbereich 108 angeordnetes Plenum 110 zugeführt.

Unter dem Arbeitsbereich 108 ist eine Filteranlage 112 angeordnet, mittels welcher der durch den Arbeitsbereich 108 hindurchgeführte Gasstrom von im Behandlungsbetrieb anfallenden Lack-Overspray-Teilchen gereinigt werden kann.

Die Filteranlage 112 umfasst hierzu insbesondere regenerative Filtervorrichtungen, bei welchen dem zu reinigenden Gasstrom Filterhilfsmaterial zugeführt wird. Die Lack-Overspray-Teilchen werden dann zusammen mit dem Filterhilfsmaterial an Filterelementen der Filtervorrichtungen abgeschieden.

Die Filteranlage 112 umfasst somit insbesondere Teilchenabscheidevorrichtungen 114 zum Abscheiden von Teilchen, insbesondere Lack-Overspray-Teilchen.

Der mittels der Filteranlage 112 gereinigte Gasstrom kann bei der in Fig. 1 dargestellten ersten Ausführungsform der Oberflächenbehandlungsvorrichtung 100 zumindest teilweise mittels einer Abluftvorrichtung 116 an die Umgebung der Oberflächenbehandlungsvorrichtung 100 abgegeben werden.

Ferner kann vorgesehen sein, dass der mittels der Filteranlage 112 gereinigte Gasstrom zumindest teilweise mittels einer Umluftführung 118 in einem Kreislauf geführt und erneut dem Arbeitsbereich 108 zugeführt wird.

Vorzugsweise wird stets ein Teil des durch den Arbeitsbereich 108 hindurchgeführten Gasstroms mittels der Abluftvorrichtung 116 abgeführt und ein Teil des durch den Arbeitsbereich 108 hindurchgeführten Gasstroms mittels der Umluftführung 118 erneut dem Arbeitsbereich 108 zugeführt.

Um den Teil des Gasstroms, welcher über die Abluftvorrichtung 116 abgeführt wird, zu ersetzen, umfasst die Oberflächenbehandlungsvorrichtung 100 eine Zuluftvorrichtung 120.

Mittels der Zuluftvorrichtung 120 kann dem Arbeitsbereich 108 Zuluft, insbesondere Frischluft, zugeführt werden.

Die Zuluftvorrichtung 120, die Umluftführung 118 und die Abluftvorrichtung 116 sind Bestandteile einer Strömungsführungsvorrichtung 122 der Oberflächenbehandlungsvorrichtung 100.

Zum Antreiben der Gasströme in der Strömungsführungsvorrichtung 122, insbesondere des durch den Arbeitsbereich 108 hindurchgeführten Gasstroms, eines in der Umluftführung 118 geführten Umluftstroms, eines über die Abluftvorrichtung 116 abgeführten Abluftstroms und eines mittels der Zuluftvorrichtung 120 zugeführten Zuluftstroms, umfasst die Strömungsführungsvorrichtung 122 mehrere Ventilatoren 124.

Ferner umfasst die Oberflächenbehandlungsvorrichtung 100 zwei Konditioniervorrichtungen 126.

Eine Konditioniervorrichtung 126 ist vorzugsweise der Zuluftvorrichtung 120 zugeordnet, so dass der dem Arbeitsbereich 108 zuzuführende Zuluftstrom insbesondere hinsichtlich seiner Feuchtigkeit und seiner Temperatur konditioniert werden kann.

Eine weitere Konditioniervorrichtung 126 ist der Umluftführung 118 zugeordnet, so dass der Umluftstrom vor der Zuführung zu dem Arbeitsbereich 108 hinsichtlich der Feuchtigkeit und der Temperatur konditioniert werden kann.

Die vorstehend beschriebene Oberflächenbehandlungsvorrichtung 100 funktioniert wie folgt:
Mittels einer (nicht dargestellten) Fördervorrichtung werden Werkstücke 104, insbesondere Fahrzeugkarosserien, in den Arbeitsbereich 108 eingebracht und dort lackiert.

Während des Lackiervorgangs nimmt die im Arbeitsbereich 108 befindliche Luft Lack-Overspray-Teilchen auf.

Zur Vermeidung einer unerwünschten Verunreinigung des Arbeitsbereichs 108 und/oder der Werkstücke 104 mit Lack-Overspray wird die in dem Arbeitsbereich 108 befindliche Luft abgeführt. Insbesondere wird ein Gasstrom durch den Arbeitsbereich 108 hindurchgeführt.

Der durch den Arbeitsbereich 108 hindurchgeführte Gasstrom ist eine Mischung aus einem Zuluftstrom, welcher mittels der Zuluftvorrichtung 120 zugeführt und mittels der Konditioniervorrichtung 126 der Zuluftvorrichtung 120 konditioniert wurde, und einem Umluftstrom, welcher bereits zuvor durch den Arbeitsbereich 108 hindurchgeführt und mittels der Filteranlage 112 gereinigt sowie mittels der Konditioniervorrichtung 126 der Umluftführung 118 konditioniert wurde.

Ein Teil des durch den Arbeitsbereich 108 hindurchgeführten Gasstroms wird als Abluftstrom über die Abluftvorrichtung 116 abgeführt.

Durch die Verwendung einer Umluftführung 118 kann die Oberflächenbehandlungsvorrichtung 100 mit geringem Energieaufwand betrieben werden.

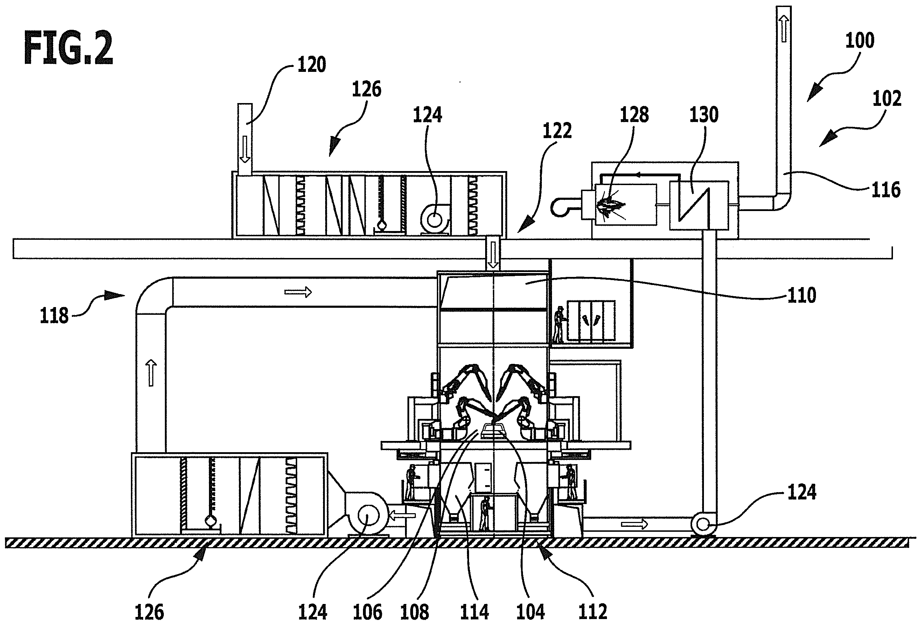

Eine in Fig. 2 dargestellte zweite Ausführungsform einer Oberflächenbehandlungsvorrichtung 100 unterscheidet sich von der in Fig. 1 dargestellten ersten Ausführungsform im Wesentlichen dadurch, dass der Abluftvorrichtung 116 eine thermische Abluftreinigungsvorrichtung 128 zugeordnet ist.

Mittels der thermischen Abluftreinigungsvorrichtung 128 können insbesondere im Behandlungsbetrieb der Oberflächenbehandlungsvorrichtung 100 abgegebene Lösemittel, welche von dem durch den Arbeitsbereich 108 hindurchgeführten Gasstrom aufgenommen und mit der Filteranlage 112 nicht aus dem Gasstrom entfernt werden können, unschädlich gemacht, insbesondere chemisch in gesundheitsunbedenkliche Stoffe umgewandelt, werden.

Die Abluftvorrichtung 116 der Oberflächenbehandlungsvorrichtung 100 gemäß der in Fig. 2 dargestellten zweiten Ausführungsform umfasst ferner einen Wärmetauscher 130. Mittels des Wärmetauschers 130 kann Wärme, die im Betrieb der thermischen Abluftreinigungsvorrichtung 128 entsteht, vor der Zuführung des Abluftstroms zu der thermischen Abluftreinigungsvorrichtung 128 auf den Abluftstrom übertragen werden.

Dadurch, dass die zweite Ausführungsform der Oberflächenbehandlungsvorrichtung 100 eine thermische Abluftreinigungsvorrichtung 128 umfasst, kann die Oberflächenbehandlungsvorrichtung 100 besonders umweltfreundlich betrieben werden.

Im Übrigen stimmt die in Fig. 2 dargestellte zweite Ausführungsform der Oberflächenbehandlungsvorrichtung 100 hinsichtlich Aufbau und Funktion mit der in Fig. 1 dargestellten ersten Ausführungsform überein, so dass auf deren vorstehende Beschreibung insoweit Bezug genommen wird.

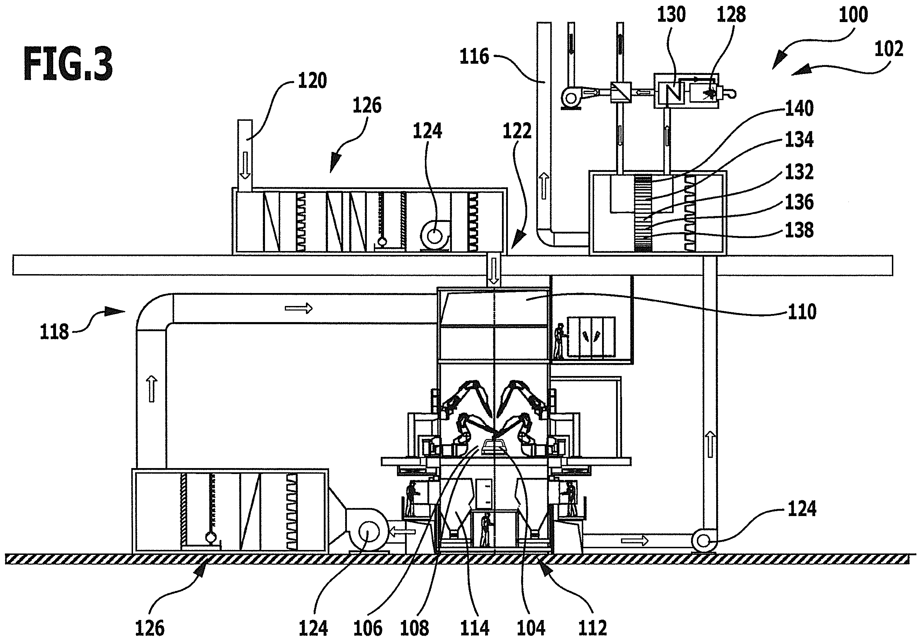

Eine in Fig. 3 dargestellte dritte Ausführungsform der Oberflächenbehandlungsvorrichtung 100 unterscheidet sich von der in Fig. 2 dargestellten zweiten Ausführungsform im Wesentlichen dadurch, dass zusätzlich zu der thermischen Abluftreinigungsvorrichtung 128 und dem Wärmetauscher 130 eine Aufbereitungsvorrichtung 132 zum Aufbereiten des lösemittelhaltigen Abluftstroms vorgesehen ist.

Vorzugsweise ist die Aufbereitungsvorrichtung 132 eine Kohlefaser-Papier-Rotor-Vorrichtung.

Die Aufbereitungsvorrichtung 132 umfasst eine Drehvorrichtung 134 zum Drehen eines Abscheideelements 136.

Das Abscheideelement 136 kann beispielsweise in einem bezüglich der Schwerkraftrichtung unteren Bereich 138 mit lösemittelhaltiger Abluft durchströmt werden, wodurch das Lösemittel aus der Abluft abgeschieden wird.

Beispielsweise in einem bezüglich der Schwerkraftrichtung oberen Bereich 140 des Abscheideelements 136 wird das Abscheideelement 136 regeneriert.

Hierzu wird erhitzte Luft, insbesondere mittels der thermischen Abluftreinigungsvorrichtung 128 und eines Wärmetauschers 130 erhitzte Frischluft, dem oberen Bereich 140 des Abscheideelements 136 zugeführt, so dass das in dem Abscheideelement 136 enthaltene Lösemittel abgegeben wird.

Der durch das Abscheideelement 136 geführte, mit Lösemittel beladene Luftstrom wird dann der thermischen Abluftreinigungsvorrichtung 128 zugeführt, so dass die darin enthaltenen Lösemittel thermisch umgewandelt und hierdurch unschädlich gemacht werden.

Mittels der Drehvorrichtung 134 kann das Abscheideelement 136 bei Bedarf gedreht werden. Der zunächst untere Bereich 138 wird hierdurch zum oberen Bereich 140, während der zunächst obere Bereich 140 zum unteren Bereich 138 wird. Mittels der Aufbereitungsvorrichtung 132 ist hierdurch eine kontinuierliche Abluftreinigung möglich.

Im Übrigen stimmt die in Fig. 3 dargestellte dritte Ausführungsform der Oberflächenbehandlungsvorrichtung hinsichtlich Aufbau und Funktion mit der in Fig. 2 dargestellten zweiten Ausführungsform überein, so dass auf deren vorstehende Beschreibung insoweit Bezug genommen wird.

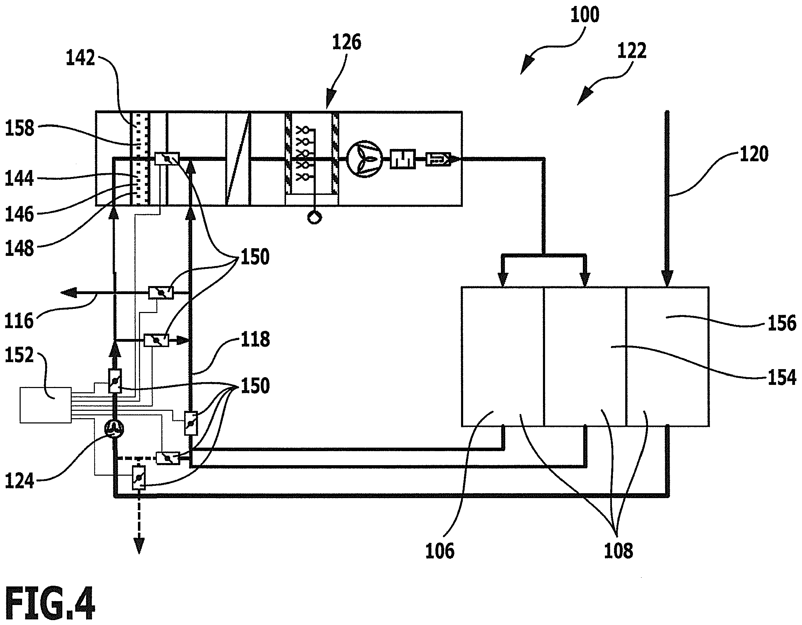

Eine in Fig. 4 dargestellte vierte Ausführungsform einer Oberflächenbehandlungsvorrichtung 100 unterscheidet sich von der in Fig. 1 dargestellten ersten Ausführungsform im Wesentlichen dadurch, dass drei Arbeitsbereiche 108 vorgesehen sind und die Oberflächenbehandlungsvorrichtung 100 eine Lösemittelabscheidevorrichtung 142 umfasst.

Die Lösemittelabscheidevorrichtung 142 umfasst beispielsweise eine Adsorptionsvorrichtung 144 zum Adsorbieren von Lösemittel, eine Kondensationsvorrichtung 146, zum Auskondensieren von Lösemitteln und/oder eine Verbrennungsvorrichtung 148, zum thermischen Umwandeln von Lösemittel.

Die Strömungsführungsvorrichtung 122 umfasst bei der in Fig. 4 dargestellten vierten Ausführungsform der Oberflächenbehandlungsvorrichtung 100 mehrere Ventile 150 zum Steuern und/oder Regeln von Gasströmen.

Unter Ventilen 150 sind dabei auch Klappen oder andere Vorrichtungen zu verstehen, mit welchen ein Volumenstrom und/oder eine Strömungsrichtung eines Gasstroms gezielt beeinflusst werden kann.

Zur gezielten Steuerung und/oder Regelung der Ventile 150 ist eine Steuervorrichtung 152 der Oberflächenbehandlungsvorrichtung 100 vorgesehen.

In Fig. 4 ist die Oberflächenbehandlungsvorrichtung 100 in einem Behandlungsbetrieb dargestellt, in welchem Werkstücke 104 behandelt werden.

Die Oberflächenbehandlungsvorrichtung 100 umfasst hierzu einen als Lackierbereich 106 ausgebildeten Arbeitsbereich 108, einen als Trocknungsbereich 154 ausgebildeten Arbeitsbereich 108 und einen als Kontrollbereich 156 ausgebildeten Arbeitsbereich 108.

Mittels einer (nicht dargestellten) Fördervorrichtung werden die Werkstücke 104 nacheinander durch den Lackierbereich 106, den Trocknungsbereich 154 und den Kontrollbereich 156 gefördert.

Die Ventile 150 sind im Behandlungsbetrieb der Oberflächenbehandlungsvorrichtung 100 so angesteuert und angeordnet, dass mittels der Zuluftvorrichtung 120 Zuluft zu dem Kontrollbereich 156 zugeführt, durch den Kontrollbereich 156 hindurchgeführt und der Lösemittelabscheidevorrichtung 142 zugeführt werden kann.

Die durch die Lösemittelabscheidevorrichtung 142 geführte Zuluft wird dem in der Umluftführung 118 geführten Umluftstrom zugeführt.

Der Umluftstrom ist dabei ein Gasstrom, welcher durch die Arbeitsbereiche 108, insbesondere den Lackierbereich 106 und den Trocknungsbereich 154, hindurchgeführt wird.

Der Umluftstrom kann dabei mittels der Konditioniervorrichtung 126 hinsichtlich seiner Feuchtigkeit und Temperatur konditioniert werden.

Mittels der Abluftvorrichtung 116 kann ferner Abluft aus der Umluftführung 118 abgeführt werden.

In dem in Fig. 4 dargestellten Behandlungsbetrieb der Oberflächenbehandlungsvorrichtung 100 wird der in der Umluftführung 118 geführte Umluftstrom an der Lösemittelabscheidevorrichtung 142 vorbeigeführt.

Die Lösemittelabscheidevorrichtung 142 ist somit in einem Ruhezustand, in welchem kein Lösemittel aus dem durch die Arbeitsbereiche 108 geführten Gasstrom mittels der Lösemittelabscheidevorrichtung 142 abgeschieden wird.

Lediglich in dem Zuluftstrom vorhandene Lösemittel werden mittels der Lösemittelabscheidevorrichtung 142 abgeschieden.

Aufgrund der kontinuierlichen Durchströmung der Lösemittelabscheidevorrichtung 142 mit dem Zuluftstrom werden jedoch dann, wenn der Lösemittelgehalt in dem Zuluftstrom unterhalb der temperatur- und stoffspezifischen Sättigungskonzentration liegt, in der Lösemittelabscheidevorrichtung 142 enthaltene Lösemittel von dem Zuluftstrom aufgenommen und dem Umluftstrom, insbesondere dem den Arbeitsbereichen 108 zuzuführenden Gasstrom, zugeführt.

Im Behandlungsbetrieb der Oberflächenbehandlungsvorrichtung 100 erhöht sich die Konzentration des Lösemittels im Umluftstrom im Laufe der Zeit. Durch die kontinuierliche Zuführung von Zuluft und das kontinuierliche Abführen von Abluft stellt sich jedoch vorzugsweise ein Gleichgewichtszustand mit im Wesentlichen konstanter Lösemittelkonzentration im Umluftstrom ein.

Insbesondere dann, wenn der Lackierbereich 106 und/oder der Trocknungsbereich 154 für Personen zugänglich gemacht werden sollen, muss die Lösemittelkonzentration in diesen Arbeitsbereichen 108 stark reduziert werden.

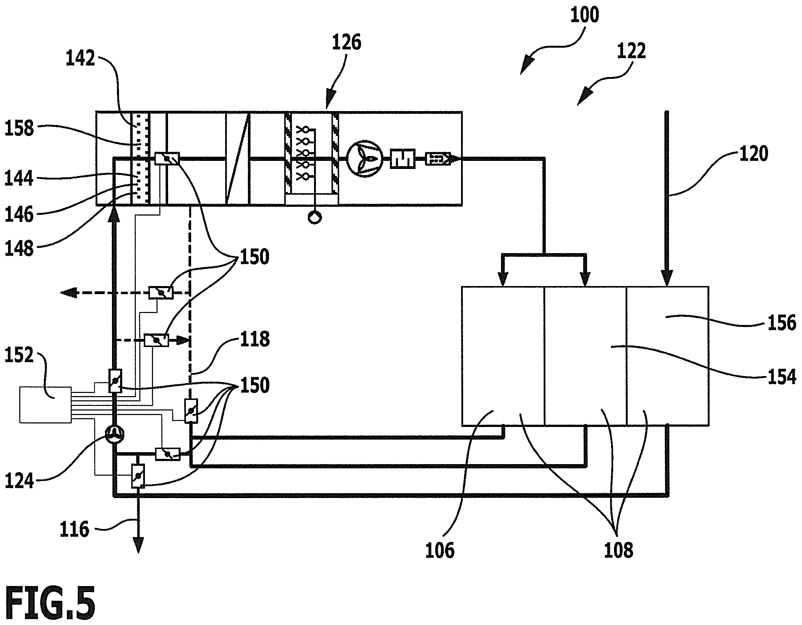

Die Oberflächenbehandlungsvorrichtung 100 kann hierzu in den Fig. 5 dargestellten Ruhebetrieb versetzt werden.

In diesem Ruhebetrieb der Oberflächenbehandlungsvorrichtung 100 wird die Lösemittelabscheidevorrichtung 142 sowohl von dem Zuluftstrom als auch von dem Umluftstrom durchströmt.

In dem durch die Arbeitsbereiche 108 hindurchgeführten Gasstrom enthaltene Lösemittel werden dabei mittels der Lösemittelabscheidevorrichtung 142 abgeschieden, so dass die Konzentration von Lösemittel in dem durch die Arbeitsbereiche 108 hindurchgeführten Gasstrom, insbesondere dem Umluftstrom, in kurzer Zeit stark reduziert werden kann.

Die Lösemittelabscheidevorrichtung 142 ist somit im Ruhebetrieb der Oberflächenbehandlungsvorrichtung 100 im Abscheidezustand.

Bei einer Oberflächenbehandlungsvorrichtung 100 mit einer Umluftfahrweise mit 10 bis 20 % Frischluft- und Abluft-Anteil mit der Lösemittelabscheidevorrichtung 142 sind insbesondere der Lackierbereich 106 und der Trocknungsbereich 154 dadurch in kürzerer Zeit für Personen zugänglich als bei einer Oberflächenbehandlungsvorrichtung 100 mit einer Umluftfahrweise mit 10 bis 20 % Frischluft- und Abluft-Anteil ohne die Lösemittelabscheidevorrichtung 142. Vorzugsweise ist der Zugang nach bis zu 80 % der Zeit möglich, besonders bevorzugt nach bis zu 50 % der Zeit.

Ein aufwendiger Spülvorgang der Arbeitsbereiche 108 mit Frischluft und die aufwendige Entsorgung des lösemittelhaltigen Umluftstroms kann hierdurch vorzugsweise vermieden werden.

Die in den Fig. 4 und 5 dargestellte vierte Ausführungsform der Oberflächenbehandlungsvorrichtung 100 kann durch geeignete Steuerung der Ventile 150 ferner besonders einfach in den Behandlungsbetrieb zurückversetzt werden.

Das in der Lösemittelabscheidevorrichtung 142 aufgenommene Lösemittel wird dann im Behandlungsbetrieb mittels der durch die Lösemittelabscheidevorrichtung 142 hindurchgeführten Zuluft in den den Arbeitsbereichen 108 zuzuführenden Gasstrom abgegeben.

Der den Arbeitsbereichen 108 zuzuführende Gasstrom und somit auch der Umluftstrom erhalten auf diese Weise besonders schnell wieder die im Behandlungsbetrieb vorherrschenden Prozessparameter, insbesondere kann hierdurch der Lösemittelgehalt in dem Umluftstrom besonders schnell in den Gleichgewichtszustand gebracht werden.

Mittels der Lösemittelabscheidevorrichtung 142 kann bei der in den Fig. 4 und 5 dargestellten vierten Ausführungsform der Oberflächenbehandlungsvorrichtung 100 somit Lösemittel zwischengespeichert werden, um die Arbeitsbereiche 108 schnell zugänglich zu machen.

Die Lösemittelabscheidevorrichtung 142 ist somit eine Lösemittelzwischenspeichervorrichtung 158.

Insbesondere kann mittels einer solchen Lösemittelzwischenspeichervorrichtung 158 die Abklingzeit der Arbeitsbereiche 108 bis zu einem möglichen Zutritt von Personen stark reduziert werden.

Bei der in den Fig. 4 und 5 dargestellten vierten Ausführungsform der Oberflächenbehandlungsvorrichtung 100 ist die Lösemittelabscheidevorrichtung 142 bezüglich einer Durchströmungsrichtung im Ruhebetrieb der Oberflächenbehandlungsvorrichtung 100 stromaufwärts einer Konditioniervorrichtung 126 zum Konditionieren des Umluftstroms angeordnet. Somit wird im Ruhebetrieb der Oberflächenbehandlungsvorrichtung 100 der Zuluftstrom zusammen mit dem Umluftstrom zunächst durch die Lösemittelabscheidevorrichtung 142 und anschließend durch die Konditioniervorrichtung 126 geführt.

Ferner kann bei der vierten Ausführungsform der Oberflächenbehandlungsvorrichtung 100 vorgesehen sein, dass im Behandlungsbetrieb der Oberflächenbehandlungsvorrichtung 100 der Zuluftstrom teilweise der Lösemittelabscheidevorrichtung 142 und teilweise direkt der Umluftführung 118 zugeführt wird.

Im Übrigen stimmt die in den Fig. 4 und 5 dargestellte vierte Ausführungsform der Oberflächenbehandlungsvorrichtung 100 hinsichtlich Aufbau und Funktion mit der in Fig. 1 dargestellten ersten Ausführungsform überein, so dass auf deren vorstehende Beschreibung insoweit Bezug genommen wird.

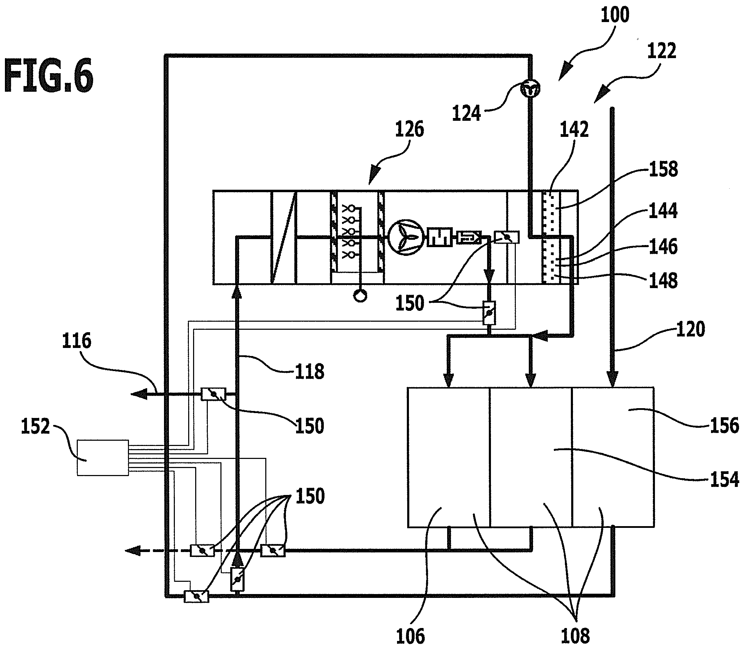

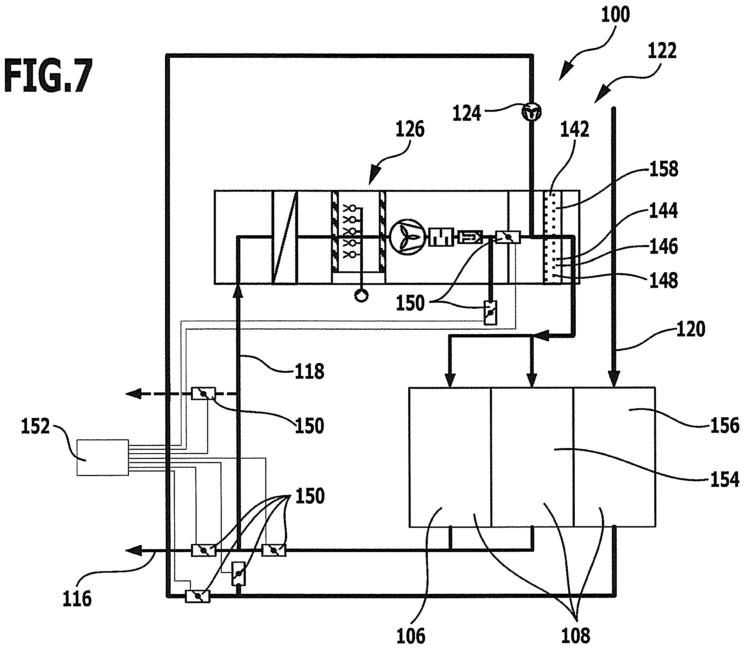

Eine in den Fig. 6 und 7 dargestellte fünfte Ausführungsform einer Oberflächenbehandlungsvorrichtung 100 unterscheidet sich von der in den Fig. 4 und 5 dargestellten vierten Ausführungsform im Wesentlichen dadurch, dass die Lösemittelabscheidevorrichtung 142 bezüglich einer Strömungsrichtung des Umluftstroms im Ruhebetrieb der Oberflächenbehandlungsvorrichtung 100 stromabwärts der Konditioniervorrichtung 126 zur Konditionierung des Umluftstroms angeordnet ist.

Die mittels der Zuluftvorrichtung 120 zugeführte Zuluft wird dabei zwischen der Konditioniervorrichtung 126 für die Umluft und der Lösemittelabscheidevorrichtung 142 dem in der Umluftführung 118 geführten Gasstrom zugeführt, wenn die Oberflächenbehandlungsvorrichtung 100 im Ruhebetrieb ist (siehe Fig. 7).

Die mittels der Zuluftvorrichtung 120 zugeführte Zuluft wird bei der in den Fig. 6 und 7 dargestellten fünften Ausführungsform der Oberflächenbehandlungsvorrichtung 100 weder im Behandlungsbetrieb noch im Ruhebetrieb mittels der Konditioniervorrichtung 126 für die Umluft konditioniert.

Im Übrigen stimmt die in den Fig. 6 und 7 dargestellte fünfte Ausführungsform der Oberflächenbehandlungsvorrichtung 100 hinsichtlich Aufbau und Funktion mit der in den Fig. 4 und 5 dargestellten vierten Ausführungsform überein, so dass auf deren vorstehende Beschreibung insoweit Bezug genommen wird.

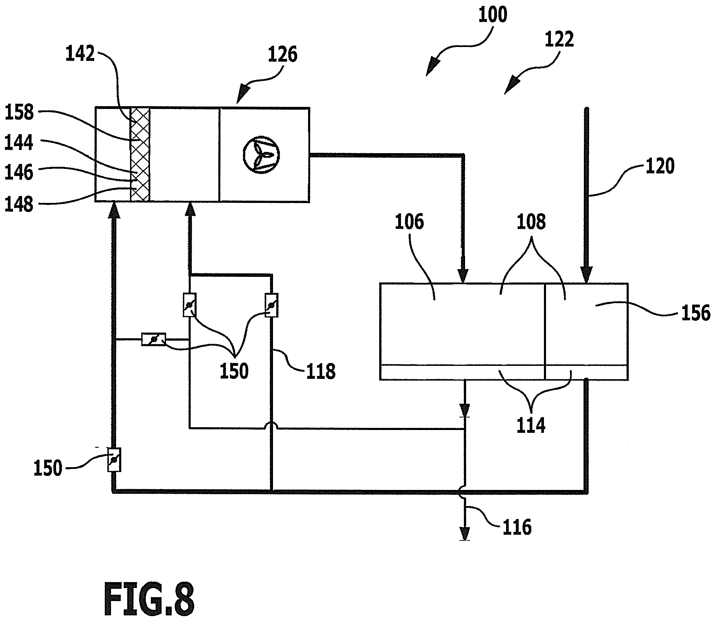

Eine in Fig. 8 dargestellte sechste Ausführungsform einer Oberflächenbehandlungsvorrichtung 100 unterscheidet sich von der in den Fig. 4 und 5 dargestellten vierten Ausführungsform im Wesentlichen dadurch, dass der Zuluftstrom im Ruhebetrieb stromabwärts der Lösemittelabscheidevorrichtung 142 und damit an der Lösemittelabscheidevorrichtung 142 vorbei der Umluftführung 118 zugeführt wird.

Über die Stellung der Ventile 150 kann dabei der Volumenstrom oder Massenstrom der mit Lösemittel beladenen Luft, welcher durch die Lösemittelabscheidevorrichtung 142 geführt wird, gezielt gesteuert und/oder geregelt werden. Die mittels der Zuluftvorrichtung 120 zugeführte Zuluft, insbesondere Frischluft, führt dann nicht zu einer Verdünnung des im Ruhebetrieb der Oberflächenbehandlungsvorrichtung 100 der Lösemittelabscheidevorrichtung 142 zuzuführenden Gasstroms, insbesondere Umluftstroms. Hierdurch kann die Verweilzeit des mit Lösemittel beladenen Gasstroms in der Lösemittelabscheidevorrichtung 142 erhöht und die Effizienz des Abscheidevorgangs gesteigert werden.

Der Abluftstrom wird vorzugsweise nach einer Teilchenabscheidevorrichtung 114 aus der Umluftführung 118 abgeführt.

Im Übrigen stimmt die in Fig. 8 dargestellte sechste Ausführungsform der Oberflächenbehandlungsvorrichtung 100 hinsichtlich Aufbau und Funktion mit der in den Fig. 4 und 5 dargestellten vierten Ausführungsform überein, so dass auf deren vorstehende Beschreibung insoweit Bezug genommen wird.

Bei weiteren (nicht dargestellten) Ausführungsformen kann vorgesehen sein, dass einzelne oder mehrere Merkmale der vorstehend beschriebenen Ausführungsformen miteinander kombiniert werden. Beispielsweise kann die vierte Ausführungsform gemäß den Fig. 4 und 5 mit einer thermischen Abluftreinigungsvorrichtung 128 gemäß der in Fig. 2 dargestellten zweiten Ausführungsform der Oberflächenbehandlungsvorrichtung 100 versehen werden.

Durch die Verwendung einer Lösemittelabscheidevorrichtung 142, welche wahlweise in einen Abscheidezustand oder in einen Ruhezustand versetzbar ist, kann wahlweise Lösemittel aus dem durch den Arbeitsbereich 108 geführten Gasstrom abgeschieden oder vorzugsweise an denselben abgegeben werden. Die Oberflächenbehandlungsvorrichtung 100 ist hierdurch einfach und sicher betreibbar.

## Patentansprüche

1. Oberflächenbehandlungsvorrichtung zum Behandeln einer Oberfläche eines Werkstücks (104), umfassend:
- einen Arbeitsbereich (108), in welchem die Oberfläche des Werkstücks (104) behandelbar ist;
- eine Strömungsführungsvorrichtung (122), mittels welcher ein Gasstrom durch den Arbeitsbereich (108) hindurchführbar ist;
- eine Lösemittelabscheidevorrichtung (142) zum Abscheiden von Lösemittel aus dem durch den Arbeitsbereich (108) hindurchgeführten Gasstrom,
wobei die Lösemittelabscheidevorrichtung (142) wahlweise in einen Abscheidezustand oder in einen Ruhezustand versetzbar ist,
wobei die Lösemittelabscheidevorrichtung (142) in dem Abscheidezustand Lösemittel aus dem Gasstrom abscheidet,
**dadurch gekennzeichnet,**
**dass** mittels einer Zuluftvorrichtung (120) der Oberflächenbehandlungsvorrichtung (100) ein Zuluftstrom der Strömungsführungsvorrichtung (122) zuführbar ist,
wobei mittels der Lösemittelabscheidevorrichtung (142) Lösemittel in den Zuluftstrom und/oder an einen durch den Arbeitsbereich (108) geführten Umluftstrom abgebbar ist.

2. Oberflächenbehandlungsvorrichtung nach Anspruch 1, **dadurch gekennzeichnet, dass** der Gasstrom mittels der Strömungsführungsvorrichtung (122) erneut demselben Arbeitsbereich (108) und/oder einem weiteren Arbeitsbereich (108) der Oberflächenbehandlungsvorrichtung (100) zuführbar ist.

3. Oberflächenbehandlungsvorrichtung nach Anspruch 1, **dadurch gekennzeichnet, dass** die Oberflächenbehandlungsvorrichtung (100) eine als regenerierbare Filtervorrichtung ausgebildete Teilchenabscheidevorrichtung (114) zum Abscheiden von Teilchen aus einem durch einen Arbeitsbereich (108) geführten, mit Teilchen beladenen Gasstrom umfasst.

4. Oberflächenbehandlungsvorrichtung nach einem der Ansprüche 1 bis 3, **dadurch gekennzeichnet, dass** die Oberflächenbehandlungsvorrichtung (100) eine Steuervorrichtung (152) umfasst, mittels welcher die Oberflächenbehandlungsvorrichtung (100) wahlweise in einem Behandlungsbetrieb, in dem Werkstücke (104) behandelt werden, oder in einem Ruhebetrieb, in dem keine Werkstücke (104) behandelt werden, betreibbar ist,
wobei in dem Behandlungsbetrieb der Oberflächenbehandlungsvorrichtung (100) die Lösemittelabscheidevorrichtung (142) im Ruhezustand ist und wobei in dem Ruhebetrieb der Oberflächenbehandlungsvorrichtung (100) die Lösemittelabscheidevorrichtung (142) im Abscheidezustand ist, so dass die Lösemittelabscheidevorrichtung (142) Lösemittel aus dem durch den Arbeitsbereich (108) hindurchgeführten Gasstrom abscheidet.

5. Oberflächenbehandlungsvorrichtung nach einem der Ansprüche 1 bis 4, **dadurch gekennzeichnet, dass** die Lösemittelabscheidevorrichtung (142) eine Lösemittelzwischenspeichervorrichtung (158) ist, mittels welcher Lösemittel, das in einem Behandlungsbetrieb der Oberflächenbehandlungsvorrichtung (100) in einem einem Arbeitsbereich (108) zuzuführenden Gasstrom enthalten ist, in einem Ruhebetrieb der Oberflächenbehandlungsvorrichtung (100) aus dem Gasstrom abscheidbar ist.

6. Oberflächenbehandlungsvorrichtung nach einem der Ansprüche 1 bis 5, **dadurch gekennzeichnet, dass** die Lösemittelabscheidevorrichtung (142) eine Lösemittelzwischenspeichervorrichtung (158) ist, mittels welcher Lösemittel, das in einem Ruhebetrieb der Oberflächenbehandlungsvorrichtung (100) in der Lösemittelabscheidevorrichtung (142) aufgenommen ist, in einem Behandlungsbetrieb der Oberflächenbehandlungsvorrichtung (100) an einen einem Arbeitsbereich (108) zuzuführenden Gasstrom abgebbar ist.

7. Oberflächenbehandlungsvorrichtung nach einem der Ansprüche 1 bis 6, **dadurch gekennzeichnet, dass** die Lösemittelabscheidevorrichtung (142) eine Adsorptionsvorrichtung (144) zur Adsorption von Lösemittel, eine Kondensationsvorrichtung (146) zum Auskondensieren von Lösemittel und/oder eine Verbrennungsvorrichtung (148) zur thermischen Umwandlung von Lösemittel umfasst.

8. Oberflächenbehandlungsvorrichtung nach einem der Ansprüche 1 bis 7, **dadurch gekennzeichnet, dass** der Arbeitsbereich (108) ein Lackierbereich (106), ein Trocknungsbereich (154) und/oder ein Kontrollbereich (156) zum Lackieren, Trocknen, Kontrollieren und/oder Nacharbeiten von Werkstücken (104) ist.

9. Oberflächenbehandlungsvorrichtung nach einem der Ansprüche 1 bis 8, **dadurch gekennzeichnet, dass** die Oberflächenbehandlungsvorrichtung (100) eine Konditioniervorrichtung (126) umfasst, mittels welcher ein Zuluftstrom und/oder ein durch einen Arbeitsbereich (108) hindurchgeführter Gasstrom vor der Zuführung zu einem Arbeitsbereich (108) konditionierbar sind.

10. Verfahren zum Betrieb einer Oberflächenbehandlungsvorrichtung, wobei
- eine Oberfläche eines Werkstücks (104) in einem Arbeitsbereich (108) der Oberflächenbehandlungsvorrichtung (100) behandelt wird;
- ein Gasstrom durch den Arbeitsbereich (108) hindurchgeführt wird;
- eine Lösemittelabscheidevorrichtung (142) zum Abscheiden von Lösemittel aus dem durch den Arbeitsbereich (108) hindurchgeführten Gasstrom wahlweise in einen Abscheidezustand oder in einen Ruhezustand versetzt wird,
wobei die Lösemittelabscheidevorrichtung (142) in dem Abscheidezustand Lösemittel aus dem Gasstrom abscheidet,
**dadurch gekennzeichnet,**
**dass** mittels einer Zuluftvorrichtung (120) der Oberflächenbehandlungsvorrichtung (100) ein Zuluftstrom der Strömungsführungsvorrichtung (122) zugeführt wird,
wobei mittels der Lösemittelabscheidevorrichtung (142) Lösemittel in den Zuluftstrom und/oder an einen durch den Arbeitsbereich (108) geführten Umluftstrom abgegeben wird.

11. Verfahren nach Anspruch 10, **dadurch gekennzeichnet, dass** der durch den Arbeitsbereich (108) hindurchgeführte Gasstrom erneut demselben Arbeitsbereich (108) oder einem weiteren Arbeitsbereich (108) der Oberflächenbehandlungsvorrichtung (100) zugeführt wird.

12. Verfahren nach einem der Ansprüche 10 oder 11, **dadurch gekennzeichnet, dass** in einem Behandlungsbetrieb der Oberflächenbehandlungsvorrichtung (100), in welchem Werkstücke (104) behandelt werden, die Lösemittelabscheidevorrichtung (142) in dem Ruhezustand ist.

13. Verfahren nach einem der Ansprüche 10 bis 12, **dadurch gekennzeichnet, dass** in einem Ruhebetrieb der Oberflächenbehandlungsvorrichtung (100), in welchem keine Werkstücke (104) behandelt werden, die Lösemittelabscheidevorrichtung (142) in dem Abscheidezustand ist, in welchem die Lösemittelabscheidevorrichtung (142) Lösemittel aus dem durch den Arbeitsbereich (108) hindurchgeführten Gasstrom abscheidet.

14. Verfahren nach einem der Ansprüche 10 bis 13, **dadurch gekennzeichnet, dass** der durch den Arbeitsbereich (108) hindurchgeführte und/oder demselben Arbeitsbereich (108) oder einem weiteren Arbeitsbereich (108) zuzuführende Gasstrom in einem Ruhebetrieb der Oberflächenbehandlungsvorrichtung (100), in welchem keine Werkstücke (104) behandelt werden, hinsichtlich seiner Luftfeuchtigkeit und/oder hinsichtlich seiner Temperatur konditioniert wird, bevor und/oder nachdem der Gasstrom der Lösemittelabscheidevorrichtung (142) zugeführt wird.

## Claims

1. A surface treatment device for treating a surface of a workpiece (104), including:
- a working region (108) in which the surface of the workpiece (104) is treatable;
- a flow guiding device (122) by means of which a gas stream is guidable through the working region (108);
- a solvent separating device (142) for separating solvent off from the gas stream that is guided through the working region (108),
wherein the solvent separating device (142) is selectively settable to a separating-off condition or a rest condition,
wherein the solvent separating device (142) separates solvent off from the gas stream in the separating-off condition,
**characterised in that**
a supply air stream is suppliable to the flow guiding device (122) by means of an air supply device (120) of the surface treatment device (100), wherein, by means of the solvent separating device (142), solvent is dischargeable into the supply air stream and/or to a circulating air stream that is guided through the working region (108).

2. A surface treatment device according to Claim 1, **characterised in that**, by means of the flow guiding device (122), the gas stream is suppliable again to the same working region (108) and/or to a further working region (108) of the surface treatment device (100).

3. A surface treatment device according to Claim 1, **characterised in that** the surface treatment device (100) includes a particle separating device (114) that takes the form of a regenerable filter device, for separating off particles from a gas stream which is loaded with particles and is guided through a working region (108).

4. A surface treatment device according to one of Claims 1 to 3,
**characterised in that** the surface treatment device (100) includes a control device (152) by means of which the surface treatment device (100) is selectively operable in a treatment mode, in which workpieces (104) are treated, or in a rest mode, in which no workpieces (104) are treated,
wherein, in the treatment mode of the surface treatment device (100), the solvent separating device (142) is in the rest condition and
wherein, in the rest mode of the surface treatment device (100), the solvent separating device (142) is in the separating-off condition, with the result that the solvent separating device (142) separates solvent off from the gas stream guided through the working region (108).

5. A surface treatment device according to one of Claims 1 to 4,
**characterised in that** the solvent separating device (142) is a solvent intermediate storage device (158) by means of which solvent that is contained in a gas stream to be supplied to a working region (108) in a treatment mode of the surface treatment device (100) is separable off from the gas stream in a rest mode of the surface treatment device (100).

6. A surface treatment device according to one of Claims 1 to 5,
**characterised in that** the solvent separating device (142) is a solvent intermediate storage device (158) by means of which solvent that has been taken up in the solvent separating device (142) in a rest mode of the surface treatment device (100) is dischargeable, in a treatment mode of the surface treatment device (100), to a gas stream to be supplied to a working region (108).

7. A surface treatment device according to one of Claims 1 to 6,
**characterised in that** the solvent separating device (142) includes an adsorption device (144) for adsorbing solvent, a condensation device (146) for condensing out solvent and/or a combustion device (148) for the thermal conversion of solvent.

8. A surface treatment device according to one of Claims 1 to 7, **characterised in that** the working region (108) is a painting region (106), a drying region (154) and/or a monitoring region (156) for the painting, drying, monitoring and/or post-treatment of workpieces (104).

9. A surface treatment device according to one of Claims 1 to 8, **characterised in that** the surface treatment device (100) includes a conditioning device (126) by means of which a supply air stream and/or a gas stream that is guided through a working region (108) are conditionable before being supplied to a working region (108).

10. A method for operating a surface treatment device, wherein
- a surface of a workpiece (104) is treated in a working region (108) of the surface treatment device (100);
- a gas stream is guided through the working region (108);
- a solvent separating device (142) for separating solvent off from the gas stream that is guided through the working region (108) is selectively set to a separating-off condition or a rest condition,
wherein the solvent separating device (142) separates solvent off from the gas stream in the separating-off condition,
**characterised in that**
a supply air stream is supplied to the flow guiding device (122) by means of an air supply device (120) of the surface treatment device (100), wherein, by means of the solvent separating device (142), solvent is discharged into the supply air stream and/or to a circulating air stream that is guided through the working region (108).

11. A method according to Claim 10, **characterised in that** the gas stream that is guided through the working region (108) is supplied again to the same working region (108) or to a further working region (108) of the surface treatment device (100).

12. A method according to one of Claims 10 or 11, **characterised in that**, in a treatment mode of the surface treatment device (100), in which workpieces (104) are treated, the solvent separating device (142) is in the rest condition.

13. A method according to one of Claims 10 to 12, **characterised in that**, in a rest mode of the surface treatment device (100), in which no workpieces (104) are treated, the solvent separating device (142) is in the separating-off condition, in which the solvent separating device (142) separates solvent off from the gas stream guided through the working region (108).

14. A method according to one of Claims 10 to 13, **characterised in that** the gas stream that is guided through the working region (108) and/or is to be supplied to the same working region (108) or a further working region (108) is conditioned in respect of its air humidity and/or its temperature in a rest mode of the surface treatment device (100), in which no workpieces (104) are treated, before and/or after the gas stream is supplied to the solvent separating device (142).

## Revendications

1. Dispositif de traitement de surface pour le traitement d'une surface d'une pièce (104), comprenant :
- une zone de travail (108), au niveau de laquelle la surface de la pièce (104) peut être traitée ;
- un dispositif de guidage de flux (122) au moyen duquel un flux de gaz peut être guidé à travers la zone de travail (108) ;
- un dispositif de capture de solvants (142) pour la capture de solvants à partir d'un flux de gaz guidé à travers la zone de travail (108),
le dispositif de capture de solvants (142) pouvant être mis au choix dans un état de capture ou un état de repos,
le dispositif de capture de solvants (142) capturant, dans l'état de capture, les solvants provenant du flux de gaz,
**caractérisé en ce que**
un dispositif d'alimentation en air (120) du dispositif de traitement de surface (100) est adapté pour introduire un flux d'air d'entrée dans le dispositif de guidage de flux (122),
le dispositif de capture de solvants (142) étant adapté pour envoyer les solvants dans le flux d'air d'entrée et/ou vers un flux de circulation d'air guidé à travers la zone de travail (108).

2. Dispositif de traitement de surface selon la revendication 1, **caractérisé en ce que** le flux de gaz peut être introduit, au moyen du dispositif de guidage de flux (122) à nouveau dans la même zone de travail (108) et/ou dans une autre zone de travail (108) du dispositif de traitement de surface (100).

3. Dispositif de traitement de surface selon la revendication 1, **caractérisé en ce que** le dispositif de traitement de surface (100) comprend un dispositif de capture de particules (114), conçu comme un dispositif de filtrage régénérable, pour la capture des particules provenant d'un flux de gaz chargé de particules guidé à travers une zone de travail (108).

4. Dispositif de traitement de surface selon l'une des revendications 1 à 3, **caractérisé en ce que** le dispositif de traitement de surface (100) comprend un dispositif de commande (152) au moyen duquel le dispositif de traitement de surface (100) peut être utilisé dans un mode de traitement, dans lequel des pièces (104) sont traitées, ou dans un mode de repos, dans lequel aucune pièce (104) n'est traitée,
moyennant quoi, dans le mode de traitement du dispositif de traitement de surface (100), le dispositif de capture de solvants (142) est dans l'état de repos et, dans le mode de repos du dispositif de traitement de surface (100), le dispositif de capture de solvants (142) est dans l'état de capture, de façon à ce que le dispositif de capture de solvants (142) capture les solvants provenant du flux de gaz guidé à travers la zone de travail (108).

5. Dispositif de traitement de surface selon l'une des revendications 1 à 4, **caractérisé en ce que** le dispositif de capture de solvants (142) est un dispositif d'entreposage de solvants (158) au moyen duquel le solvant qui est contenu, dans un mode de traitement du dispositif de traitement de surface (100), dans un flux de gaz à introduire dans une zone de travail (108), peut être séparé du flux de gaz dans un mode de repos du dispositif de traitement de surface (100).

6. Dispositif de traitement de surface selon l'une des revendications 1 à 5, **caractérisé en ce que** le dispositif de capture de solvants (142) est un dispositif d'entreposage de solvants (158) au moyen duquel le solvant qui est logé, dans un mode de repos du dispositif de traitement de surface (100), dans le dispositif de capture de solvants (142), peut être envoyé, dans un mode de traitement du dispositif de traitement de surface (100), vers un flux de gaz à introduire dans une zone de travail (108).

7. Dispositif de traitement de surface selon l'une des revendications 1 à 6, **caractérisé en ce que** le dispositif de capture de solvants (142) comprend un dispositif d'adsorption (144) pour l'adsorption de solvants, un dispositif de condensation (146) pour la condensation de solvants et/ou un dispositif de combustion (148) pour la conversion thermique de solvants.

8. Dispositif de traitement de surface selon l'une des revendications 1 à 7, **caractérisé en ce que** la zone de travail (108) est une zone de peinture (106), une zone de séchage (154) et/ou une zone de contrôle (156) pour la peinture, le séchage, le contrôle et/ou la retouche de pièces (104).

9. Dispositif de traitement de surface selon l'une des revendications 1 à 8, **caractérisé en ce que** le dispositif de traitement de surface (100) comprend un dispositif de conditionnement (126) au moyen duquel un flux d'air d'entrée et/ou un flux de gaz guidé à travers une zone de travail (108) peuvent être conditionnés avant l'introduction dans une zone de travail (108).

10. Procédé d'exploitation d'un dispositif de traitement de surface, dans lequel
- une surface de la pièce (104) est traitée dans une zone de travail (108) du dispositif de traitement de surface (100) ;
- un flux de gaz est guidé à travers la zone de travail (108) ;
- un dispositif de capture de solvants (142) pour la capture de solvants dans un flux de gaz guidé à travers la zone de travail (108) est mis, au choix, dans un état de capture ou dans un état de repos,
le dispositif de capture de solvants (142) capture, dans l'état de capture, les solvants provenant du flux de gaz,
**caractérisé en ce que**
un flux d'air d'entrée est introduit dans le dispositif de guidage de flux (122) par un dispositif d'introduction d'air (120) du dispositif de traitement de surface (100),
des solvants sont envoyés, par le dispositif de capture de solvants (142), dans le flux d'air d'entrée et/ou dans un flux d'air de circulation guidé à travers la zone de travail (108).

11. Procédé selon la revendication 10, **caractérisé en ce que** le flux de gaz guidé à travers la zone de travail (108) est introduit à nouveau dans la même zone de travail (108) ou dans une autre zone de travail (108) du dispositif de traitement de surface (100).

12. Procédé selon la revendication 10 ou 11, **caractérisé en ce que**, dans un mode de traitement du dispositif de traitement de surface (100), dans lequel des pièces (104) sont traitées, le dispositif de capture de solvants (142) est dans l'état de repos.

13. Procédé selon l'une des revendications 10 à 12, **caractérisé en ce que**, dans un mode de repos du dispositif de traitement de surface (100), dans lequel aucune pièce (104) n'est traitée, le dispositif de capture de solvants (142) est dans l'état de capture dans lequel le dispositif de capture de solvants (142) capture des solvants dans le flux de gaz guidé à travers la zone de travail (108).

14. Procédé selon l'une des revendications 10 à 13, **caractérisé en ce que**, dans un état de repos du dispositif de traitement de surface (100) dans lequel aucune pièce (104) n'est traitée, le flux de gaz guidé à travers la zone de travail (108) et/ou réintroduit dans la même zone de travail (108) ou dans une autre zone de travail (108) est conditionné en ce qui concerne son humidité et/ou sa température avant et/ou après que le flux de gaz soit introduit dans le dispositif de capture de solvants (142).
